# FASCICULE DE BREVET EUROPEEN

(11) **EP 3 669 067 B1**
(45) Date de publication et mention de la délivrance du brevet: **07.04.2021**
(21) Numéro de dépôt: 18808411.5
(22) Date de dépôt: 28.09.2018
(51) Int. Cl.: F02M 35/10, F02M 29/02, F02M 29/04

(54) **ENSEMBLE D'ADMISSION D'AIR**
LUFTEINLASSANORDNUNG
AIR INTAKE ASSEMBLY

(30) Priorité: 06.10.2017 FR 1759408
(43) Date de publication de la demande: 24.06.2020
(73) Titulaire: NOVARES France, 92140 Clamart (FR)
(72) Inventeur: SPINGLER, Gregory, 59230 Saint Amand Les Eaux (FR)
(74) Mandataire: Delorme, Nicolas
(86) Numéro de dépôt international: PCT/FR2018/052387
(87) Numéro de publication internationale: WO 2019/068993

(56) Documents cités:
- KR-Y1- 200 424 813
- US-A1- 2004 055 570
- US-A1- 2010 269 583

## Description

La présente invention concerne un ensemble d'admission d'air pour un moteur automobile, qui comprend un dispositif de redressement d'un flux d'air d'un tuyau d'admission d'air d'un véhicule automobile, pour l'optimisation de la lecture d'un débitmètre.

Les moteurs à combustion interne fonctionnent sur le principe de la combustion d'air et de carburant. Dans le cas des véhicules automobiles, l'air utilisé provient d'une ligne d'admission d'air qui permet de capter de l'air à l'extérieur du véhicule et de le filtrer avant qu'il ne soit injecté dans le moteur.

D'une manière courante, les véhicules automobiles comprennent un débitmètre positionné dans un tuyau de la ligne d'admission d'air, voir par exemple le document US 2004/055570 A1. Le débitmètre est un instrument de mesure permettant de détecter le débit d'air entrant dans le moteur. Cette détection permet notamment de contrôler le rapport stœchiométrique entre l'air et le combustible dans le moteur. De plus, le débitmètre permet aussi de contrôler le taux de recyclage des gaz d'échappement qui sont réinjectés dans le moteur. Par extension les mesures du débitmètre sont utilisées pour les homologations aux normes de pollution des véhicules.

Le débitmètre est donc un élément essentiel dont les mesures doivent être les plus précises possible. Or, le plus souvent, le débitmètre est positionné dans le tuyau d'admission d'air à la sortie de la boite à filtre, dans une zone dans laquelle le flux d'air est instable. En outre, en raison des contraintes de place dans le compartiment moteur du véhicule, le débitmètre est souvent positionné à la sortie d'un coude, ce qui augmente l'instabilité du flux d'air. L'instabilité du flux d'air fausse certaines mesures du débitmètre. Pour stabiliser le flux d'air il est connu de positionner une grille standard en amont du débitmètre. Cette disposition permet de redresser (stabiliser) une partie du flux d'air, mais s'avère insuffisante sur l'ensemble de la plage de débits d'air du fonctionnement du moteur. Ainsi, cette disposition se révèle, par exemple, insatisfaisante pour les bas débits d'air.

Dans ce contexte, la présente invention a pour objectif de fournir un ensemble d'admission d'air pour un moteur automobile qui permette de stabiliser le flux d'air sur l'ensemble de la plage de débits d'air du fonctionnement du moteur, pour permettre une mesure plus précise du débit d'air par un débitmètre.

Selon une définition générale, l'invention concerne un ensemble d'admission d'air pour un moteur automobile, comprenant un tuyau d'admission d'air, un débitmètre et un dispositif de redressement d'un flux d'air positionné en amont du débitmètre par rapport au sens de circulation du flux d'air dans le tuyau. Le dispositif de redressement d'un flux d'air comprend une partie périphérique et une partie ajourée. Le dispositif de redressement d'un flux d'air comprend des moyens de rotation permettant à la partie ajourée de pivoter par rapport à la partie périphérique.

D'une manière particulièrement avantageuse, la rotation de la partie ajourée par rapport à la partie périphérique permet de redresser le flux d'air sur l'ensemble de la plage de débit du fonctionnement moteur. Ainsi, l'invention propose un ensemble d'admission d'air pour un moteur automobile qui permet de stabiliser le flux d'air sur l'ensemble de la plage de débits d'air du fonctionnement du moteur, pour permettre une mesure plus précise du débit d'air par un débitmètre.

Les moyens de rotation sont formés par une paroi extérieure de la partie ajourée coopérant avec une paroi complémentaire de la partie périphérique.

Selon un premier mode de réalisation, la partie périphérique peut présenter une géométrie annulaire présentant un axe de révolution et la paroi extérieure présente une géométrie annulaire adaptée pour pivoter dans la partie périphérique, autour de l'axe de révolution de la partie périphérique.

Selon un deuxième mode de réalisation, les moyens de rotation peuvent comprendre une liaison pivot radiale permettant à la partie ajourée de pivoter par rapport à la partie périphérique, autour d'un axe radial à la partie périphérique.

La liaison pivot radiale peut comprendre au moins un arbre liant en rotation la paroi extérieure de la partie ajourée à la partie périphérique.

Selon une disposition particulière, la partie ajourée peut comprendre au moins un déflecteur adapté pour entraîner en rotation la partie ajourée, à partir d'une valeur seuil de la pression d'un flux d'air. Ledit au moins un déflecteur peut présenter une forme d'aile courbe avec un intrados et un extrados, pour recevoir des variations et des valeurs seuils de pression d'un flux d'air.

La paroi extérieure de la partie ajourée peut comprendre ledit au moins un déflecteur.

La partie ajourée peut comprendre une pluralité de parois intérieures définissant une pluralité de cellules.

Selon une disposition particulière, au moins une paroi intérieure peut être ledit au moins un déflecteur.

D'autres caractéristiques et avantages de la présente invention ressortiront clairement de la description détaillée ci-après de plusieurs modes de réalisation de l'invention donnés à titre d'exemple non limitatif, en référence aux dessins annexés, dans lesquels :
- La figure 1 est une vue schématique en coupe, de côté, d'un ensemble d'admission selon l'invention ;
- La figure 2 est une vue schématique en coupe de face d'un dispositif de redressement selon un premier mode de réalisation de l'invention ;
- La figure 3 est une vue schématique en coupe, de côté, d'un ensemble d'admission selon un deuxième mode de réalisation de l'invention ;
- La figure 4 est une vue schématique partielle en coupe, de côté, d'un ensemble d'admission selon un troisième mode de réalisation de l'invention ;
- La figure 5 est une vue schématique partielle en coupe, de côté, d'un ensemble d'admission selon un quatrième mode de réalisation de l'invention ;
- La figure 6 est une représentation en coupe du comportement d'un flux d'air dans un tuyau d'admission d'air dépourvu de dispositif de redressement ;
- La figure 7 est une représentation en coupe de la circulation d'un flux d'air dans un ensemble d'admission d'air selon l'invention, lorsque la partie ajourée présente une inclinaison de 0 degré par rapport à la partie périphérique ;
- La figure 8 est une représentation en coupe de la circulation d'un flux d'air dans un ensemble d'admission d'air selon l'invention, lorsque la partie ajourée présente une inclinaison de +10 degrés par rapport à la partie périphérique.

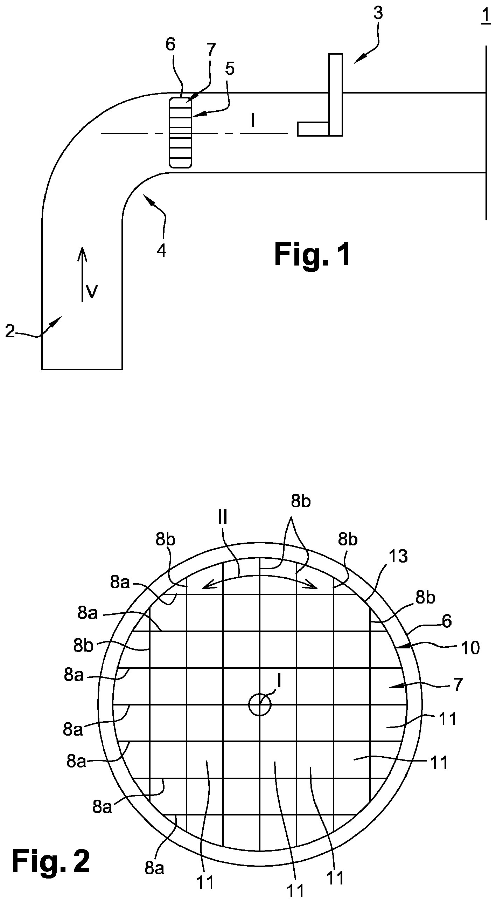

En référence à la figure 1, l'invention concerne un ensemble d'admission 1 d'air pour un moteur automobile. L'ensemble d'admission 1 comprend, un tuyau 2 d'admission d'air présentant un coude 4, un débitmètre 3 et un dispositif de redressement 5 d'un flux d'air V positionné en amont du débitmètre 3 par rapport au sens de circulation du flux d'air V dans le tuyau 2.

Le dispositif de redressement 5 comprend une partie périphérique 6 et une partie ajourée 7. De plus, le dispositif de redressement 5 comprend des moyens de rotation permettant à la partie ajourée 7 de pivoter par rapport à la partie périphérique 6.

Selon les modes de réalisation ici présentés, la partie périphérique 6 présente une géométrie annulaire avec un axe de révolution I. La partie périphérique 6 peut, par exemple, être réalisée en matière plastique moulée ou injectée.

Selon les modes de réalisation ici présentés, la partie ajourée 7 comprend une paroi extérieure 13 annulaire dans laquelle sont disposées une première série de parois intérieures 8a dans l'axe de révolution I, parallèles entre elles, et une deuxième série de parois intérieures 8b dans l'axe de révolution I, parallèles entre elles et sécantes aux parois intérieures 8a de la première série pour former une grille 10. Les espaces entre les parois intérieures 8a et 8b perpendiculaires définissent des cellules 11 dont la fonction sera détaillée ultérieurement.

La partie ajourée 7 peut être réalisée en matière plastique moulée ou injectée.

Selon un premier mode de réalisation présenté en figure 2, les moyens de rotation sont formés par la paroi extérieure 13 de la partie ajourée 7, coopérant en rotation avec une paroi complémentaire de la partie périphérique 6. Selon ce mode de réalisation, la paroi extérieure 13 de la partie ajourée 7 peut pivoter dans la partie périphérique 6, selon deux sens de rotation II, autour de l'axe de révolution I de la partie périphérique 6.

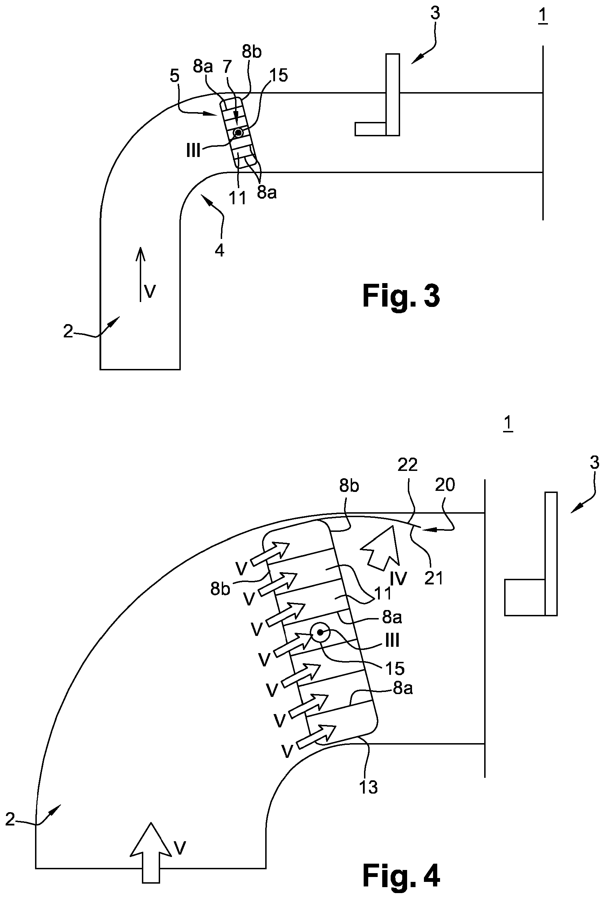

Selon trois autres modes de réalisation présentés aux figures 3 à 5, les moyens de rotation comprennent une liaison pivot radiale 15 permettant à la partie ajourée 7 de pivoter par rapport à la partie périphérique 6, autour d'un axe radial III à la partie périphérique 6.

Selon les exemples ici présentés, la liaison pivot radiale 15 comprend un arbre liant en rotation la paroi extérieure 13 de la partie ajourée 7 à la partie périphérique 6. L'arbre peut, par exemple être constitué d'un téton venu de moulage avec la partie périphérique 6 et engagé dans la paroi extérieure 13.

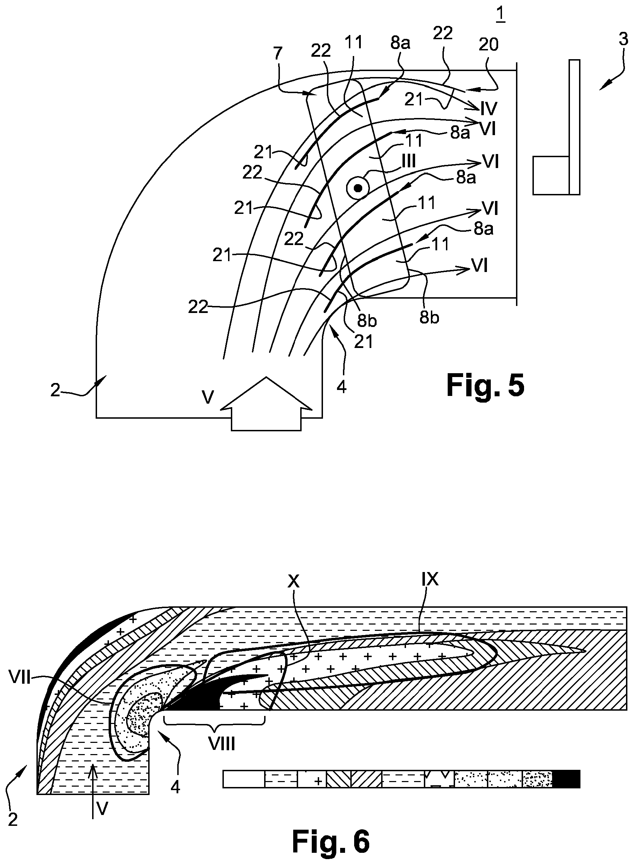

Selon le troisième et le quatrième mode de réalisation présentés aux figures 4 et 5, la paroi extérieure 13 de la partie ajourée 7 comprend un déflecteur 20. Tel que cela sera détaillé ultérieurement, le déflecteur 20 est adapté pour entrainer en rotation la partie ajourée 7, à partir d'une valeur seuil de la pression IV d'un flux d'air V.

Le déflecteur 20 présente une forme d'aile courbe avec un intrados 21 adapté pour recevoir une pression IV d'un flux d'air V et un extrados 22. Le déflecteur 20 est orienté en aval de la partie ajourée 7, de telle sorte que le flux d'air V traverse la partie ajourée 7 avant d'exercer une pression IV sur le déflecteur 20.

Selon le quatrième mode de réalisation présenté en figure 5, les parois intérieures 8a, qui sont sensiblement parallèles à l'axe radial III, présentent une forme d'aile courbe qui dépasse de la partie ajourée 7. La forme d'aile courbe des parois intérieures 8a présente un intrados 21 adapté pour recevoir une pression VI d'un flux d'air V et un extrados 22. Ainsi, selon le quatrième mode de réalisation, les parois intérieures 8a sont des déflecteurs adaptés pour entraîner en rotation la partie ajourée 7, à partir d'une valeur seuil de la pression VI d'un flux d'air V.

En condition d'utilisation, comme représenté en figure 6, dans un tuyau d'admission d'air 2 démuni de dispositif de redressement d'un flux d'air, on observe que le flux d'air V présente une vitesse plus importante dans la zone VII à l'intérieur du coude 4, que dans le reste du coude 4. Cette différence de vitesse dans le coude 4, engendre une dépression à la sortie du coude 4, qui se traduit par une forte perte de vitesse X du flux d'air V dans la zone VIII à l'issue du coude 2. Il en résulte des turbulences et un important décalage de vitesses au sein du flux d'air V, dans la zone IX dans laquelle le débitmètre 3 est usuellement positionné.

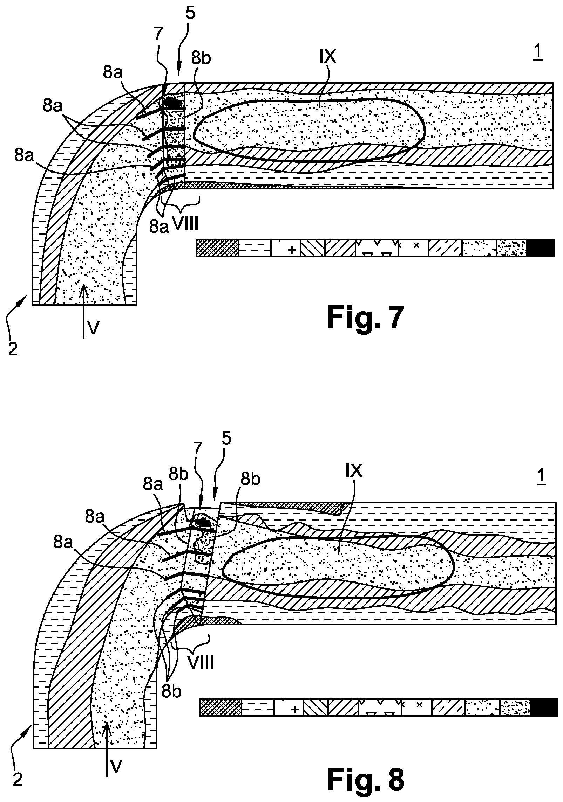

Le dispositif de redressement 5 est positionné dans la zone VIII à l'issue du coude 4. Le flux d'air V pénètre dans le tuyau 2 en amont du dispositif de redressement 5, puis traverse le dispositif de redressement 5 et débouche sur le débitmètre 3. Comme on peut l'observer sur les figures 7 et 8, le dispositif de redressement 5 permet de stabiliser le flux d'air V. Par stabiliser, on entend que le dispositif de redressement d'un flux d'air 5 permet d'homogénéiser les vitesses d'écoulement du flux d'air I. En outre, il est remarquable que l'inclinaison de la partie ajourée 7 permet de maintenir un flux d'air V stable dans la zone IX de mesures dans laquelle est positionné le débitmètre 3.

Ainsi, l'invention propose un ensemble d'admission d'air pour un moteur automobile qui permet de stabiliser le flux d'air sur l'ensemble de la plage de débits d'air du fonctionnement du moteur, pour permettre une mesure plus précise du débit d'air par un débitmètre.

Bien entendu l'invention ne se limite pas aux seules formes d'exécution représentées ci-dessus, mais elle embrasse au contraire toutes les formes de réalisations

## Revendications

1. Ensemble d'admission (1) d'air pour un moteur automobile, comprenant un tuyau (2) d'admission d'air, un débitmètre (3) et un dispositif de redressement (5) d'un flux d'air (V) positionné en amont du débitmètre (3) par rapport au sens de circulation du flux d'air (V) dans le tuyau (2), le dispositif de redressement (5) d'un flux d'air comprenant une partie périphérique (6) et une partie ajourée (7), **caractérisé en ce que** le dispositif de redressement (5) d'un flux d'air comprenant des moyens de rotation permettant à la partie ajourée (7) de pivoter par rapport à la partie périphérique (6).

2. Ensemble d'admission (1) selon la revendication 1, **caractérisé en ce que** les moyens de rotation sont formés par une paroi extérieure (13) de la partie ajourée (7) coopérant avec une paroi complémentaire de la partie périphérique (6).

3. Ensemble d'admission (1) selon la revendication 2, **caractérisé en ce que** la partie périphérique (6) présente une géométrie annulaire présentant un axe de révolution (I) et la paroi extérieure (13) présente une géométrie annulaire adaptée pour pivoter dans la partie périphérique (6), autour de l'axe de révolution (I) de la partie périphérique (6).

4. Ensemble d'admission (1) selon la revendication 1, **caractérisé en ce que** les moyens de rotation comprennent une liaison pivot radiale (15) permettant à la partie ajourée (7) de pivoter par rapport à la partie périphérique (6), autour d'un axe radial (III) à la partie périphérique (6).

5. Ensemble d'admission (1) selon la revendication 4, **caractérisé en ce que** la liaison pivot radiale (15) comprend au moins un arbre liant en rotation la paroi extérieure (13) de la partie ajourée (7) à la partie périphérique (6).

6. Ensemble d'admission (1) selon l'une quelconque des revendications 1, 4 et 5, **caractérisé en ce que** la partie ajourée (7) comprend au moins un déflecteur (20, 8a, 8b) adapté pour entrainer en rotation la partie ajourée (7), à partir d'une valeur seuil de la pression (IV, VI) d'un flux d'air (V).

7. Ensemble d'admission (1) selon la revendication 6, **caractérisé en ce que** ledit au moins un déflecteur (20, 8a, 8b) présente une forme d'aile courbe avec un intrados (21) et un extrados (22), pour recevoir des variations et des valeurs seuils de pression (IV, VI) d'un flux d'air (V).

8. Ensemble d'admission (1) selon l'une quelconque des revendications 6 ou 7, **caractérisé en ce que** la paroi extérieure (13) de la partie ajourée (7) comprend ledit au moins un déflecteur (20).

9. Ensemble d'admission (1) selon l'une quelconque des revendications 1 à 8, **caractérisé en ce que** la partie ajourée (7) comprend une pluralité de parois intérieures (8a, 8b) définissant une pluralité de cellules (11).

10. Ensemble d'admission (1) selon la revendication 9 lorsqu'elle dépend de la revendication 6 ou 7, **caractérisé en ce qu'**au moins une paroi intérieure (8a, 8b) est ledit au moins un déflecteur (20, 8a, 8b).

## Patentansprüche

1. Lufteinlassanordnung (1) für einen Kraftfahrzeugmotor, umfassend ein Lufteinlassrohr (2), einen Durchflussmesser (3) und eine Vorrichtung zum Beleben (5) eines Luftstroms (V), die stromaufwärts des Durchflussmessers (3) in Bezug auf die Zirkulationsrichtung des Luftstroms (V) in dem Rohr (2) positioniert ist, wobei die Vorrichtung zum Beleben (5) eines Luftstroms einen peripheren Teil (6) und einen durchbrochenen Teil (7) umfasst, **dadurch gekennzeichnet, dass** die Vorrichtung zum Beleben (5) eines Luftstroms Rotationsmittel umfasst, die es dem durchbrochenen Teil (7) ermöglichen, in Bezug auf den peripheren Teil (6) zu schwenken.

2. Einlassanordnung (1) nach Anspruch 1, **dadurch gekennzeichnet, dass** die Rotationsmittel durch eine äußere Wand (13) des durchbrochenen Teils (7) gebildet werden, die mit einer ergänzenden Wand des peripheren Teils (6) zusammenwirkt.

3. Einlassanordnung (1) nach Anspruch 2, **dadurch gekennzeichnet, dass** der periphere Teil (6) eine ringförmige Geometrie aufweist, die eine Rotationsachse (I) aufweist und die äußere Wand (13) eine ringförmige Geometrie aufweist, die angepasst ist, um in dem peripheren Teil (6) um die Rotationsachse (I) des peripheren Teils (6) herum zu schwenken.

4. Einlassanordnung (1) nach Anspruch 1, **dadurch gekennzeichnet, dass** die Rotationsmittel eine radiale Schwenkverbindung (15) umfassen, die es dem durchbrochenen Teil (7) ermöglichen, in Bezug auf den peripheren Teil (6) um eine zum peripheren Teil (6) radiale Achse (III) herum zu schwenken.

5. Einlassanordnung (1) nach Anspruch 4, **dadurch gekennzeichnet, dass** die radiale Schwenkverbindung (15) mindestens eine Welle umfasst, die die äußere Wand (13) des durchbrochenen Teils (7) mit dem peripheren Teil (6) drehend verbindet.

6. Einlassanordnung (1) nach einem der Ansprüche 1, 4 und 5, **dadurch gekennzeichnet, dass** der durchbrochene Teil (7) mindestens einen Abweiser (20, 8a, 8b) umfasst, der angepasst ist, um den durchbrochenen Teil (7) ausgehend von einem Schwellenwert des Drucks (IV, VI) eines Luftstroms (V) in Drehung anzutreiben.

7. Einlassanordnung (1) nach Anspruch 6, **dadurch gekennzeichnet, dass** der mindestens eine Abweiser (20, 8a, 8b) eine Form eines gekrümmten Flügels mit einer Druck- (21) und Saugseite (22) aufweist, um Variationen und Druckschwellenwerte (IV, VI) eines Luftstroms (V) zu empfangen.

8. Einlassanordnung (1) nach einem der Ansprüche 6 oder 7, **dadurch gekennzeichnet, dass** die äußere Wand (13) des durchbrochenen Teils (7) den mindestens einen Abweiser (20) umfasst.

9. Einlassanordnung (1) nach einem der Ansprüche 1 bis 8, **dadurch gekennzeichnet, dass** der durchbrochene Teil (7) eine Vielzahl von inneren Wänden (8a, 8b) umfasst, die eine Vielzahl von Zellen (11) definieren.

10. Einlassanordnung (1) nach Anspruch 9, wenn von Anspruch 6 oder 7 abhängig, **dadurch gekennzeichnet, dass** mindestens eine innere Wand (8a, 8b) der mindestens eine Abweiser (20, 8a, 8b) ist.

## Claims

1. An air intake assembly (1) for an automotive engine, comprising an air intake pipe (2), a flow meter (3) and a device (5) for straightening an air flow (V) which is positioned upstream of the flow meter (3) relative to the direction of circulation of the air flow (V) in the pipe (2), the device (5) for straightening an air flow comprising a peripheral portion (6) and an open-work portion (7), **characterized in that** the device (5) for straightening an air flow comprising rotation means allowing the open-work portion (7) to pivot relative to the peripheral portion (6).

2. The air intake assembly (1) according to claim 1, **characterized in that** the rotation means are formed by an outer wall (13) of the open-work portion (7) cooperating with a complementary wall of the peripheral portion (6).

3. The intake assembly (1) according to claim 2, **characterized in that** the peripheral portion (6) has an annular geometry having an axis of revolution (I) and the outer wall (13) has an annular geometry which is adapted to pivot in the peripheral portion (6), about the axis of revolution (I) of the peripheral portion (6).

4. The intake assembly (1) according to claim 1, **characterized in that** the rotation means comprise a radial pivot connection (15) allowing the open-work portion (7) to pivot relative to the peripheral portion (6), about an axis (III) radial to the peripheral portion (6).

5. The intake assembly (1) according to claim 4, **characterized in that** the radial pivot connection (15) comprises at least one shaft rotatably connecting the outer wall (13) of the open-work portion (7) to the peripheral portion (6).

6. The intake assembly (1) according to any one of claims 1, 4 and 5, **characterized in that** the open-work portion (7) comprises at least one deflector (20, 8a, 8b) adapted to drive in rotation the open-work portion (7), from a threshold value of the pressure (IV, VI) of an air flow (V).

7. The intake assembly (1) according to claim 6, **characterized in that** said at least one deflector (20, 8a, 8b) has the shape of a curved wing with a pressure-side surface (21) and a suction-side surface (22), to receive variations and pressure threshold values (IV, VI) of an air flow (V).

8. The intake assembly (1) according to any one of claims 6 or 7, **characterized in that** the outer wall (13) of the open-work portion (7) comprises said at least one deflector (20).

9. The intake assembly (1) according to any one of claims 1 to 8, **characterized in that** the open-work portion (7) comprises a plurality of inner walls (8a, 8b) defining a plurality of cells (11).

10. The intake assembly (1) according to claim 9 when it dependents on claim 6 or 7, **characterized in that** at least one inner wall (8a, 8b) is said at least one deflector (20, 8a, 8b).
